# EUROPEAN PATENT APPLICATION

(11) **EP 3 896 824 A1**
(43) Date of publication of application: **20.10.2021**
(21) Application number: 19908404.7
(22) Date of filing: 27.12.2019
(51) Int. Cl.: H02K 1/27

(54) **MAGNETIC CORE, ELECTRIC MOTOR HAVING MAGNETIC CORE, AND MOWER HAVING ELECTRIC MOTOR**

(30) Priority: 10.01.2019 CN 201910023702
(71) Applicant: Johnson Electric International AG, 3280 Murten (CH)
(72) Inventor: ZHANG, Tao, Shenzhen, Guangdong 518125 (CN); CHU, Junjie, Shenzhen, Guangdong 518125 (CN); LI, Min, Shenzhen, Guangdong 518125 (CN); MA, Quantong, Shenzhen, Guangdong 518125 (CN)
(74) Representative: Doherty, William
(86) International application number: PCT/CN2019/129260
(87) International publication number: WO 2020/143480

(57) **Abstract**

The invention discloses a magnetic core, which includes a ring-shaped body portion and a plurality of magnetic pole portions connected to the body portion. The magnetic pole portions are arranged on an inner surface of the body portion in a circumferential direction. The body portion and the magnetic pole portions are connected to each other. Each of the magnetic pole portions is triangular and includes a top end and two free ends. The top end is connected to the body portion. Two side surfaces on both sides of the top end of the magnetic pole portion are respectively opposite to and spaced apart from an inner surface of the body portion to form a first receiving groove and a second receiving groove, the first receiving groove and the second receiving groove are used for receiving magnets, and the first receiving groove and the second receiving groove have open ends in an inner surface of the magnetic core. The magnetic core of the present invention has a significant magnetization effect and helps to increase the power density of the motor.

## Description

### TECHNICAL FIELD

The invention relates to the field of motors, in particular to magnetic cores, motors with the magnetic cores and lawn mowers with the motors.

### BACKGROUND TECHNIQUE

An existing motor generally includes a stator and a rotor that can rotate relative to the stator. The stator includes a stator core, an insulating frame sleeved on the stator core, and windings wound on the insulating frame. The rotor includes a rotating shaft, a housing fixed on the rotating shaft, and permanent magnets fixed on the housing. How to improve the power density of motors is a goal that this field has been pursuing.

### SUMMARY OF THE INVENTION

In view of this, the present invention aims to provide a high-power density motor and its magnetic core, and a lawn mower with the motor.

For this reason, one aspect of the present invention provides a magnetic core, including an annular body portion and a plurality of magnetic pole portions connected to the body portion, the plurality of magnetic pole portions circumferentially distributed inside the body portion, characterized in that the body portion and the magnetic pole portions are connected to each other, each of the magnetic pole portions is triangular and includes a top end and two free ends, the top end is connected to the body portion, two side surfaces on both sides of the top end of the magnetic pole portion are respectively opposed to and spaced apart from an inner surface of the body portion to form a first receiving groove and a second receiving groove, the first receiving groove and the second receiving groove are for receiving magnets, the first receiving groove and the second receiving groove have open ends in an inner surface of the magnetic core.

In some embodiments, the inner surface of the body portion is in an inverted V shape and continues to extend repeatedly, the inner surface of the body portion forms alternately arranged peaks and valleys, and the top of each magnetic pole portion is connected to a corresponding valley of the body portion via a connecting portion.

Further, the inner surface of the body portion forms a first inner side surface and a second inner side surface on both sides of each valley, the two side surfaces of each magnetic pole portion are respectively opposite to and spaced apart from the first inner side surface and the second inner side surface to form the first receiving groove and the second receiving groove, wherein, an angle between the first inner side surface and the second inner side surface is an obtuse angle.

In some emdodiments, the first receiving groove and/or the second receiving groove are rectangular, and the first receiving groove and/or the second receiving groove are further extended to form recesses adjacent to the top end of the magnetic pole portion.

In somen embodiments, the body portion protrudes radially inward at the peaks to form limiting protrusions, and the limiting protrusions are located at ends of the first receiving groove and the second receiving groove away from an outer side of the body portion.

In somen embodiments, an opening is defined between adjacent free ends of two adjacent magnetic pole portions, and a width of the opening is 3 to 5 mm.

In somen embodiments, that the magnetic pole portion forms a pole face between the two free ends, and a degree of a pole arc of the pole face is 125°.

In another aspect, the present invention further provides a motor, including a stator and a rotor rotatable relative to the stator, the rotor includes the aforementioned magnetic core and magnets accommodated in the first receiving grooves and the second receiving grooves of the magnetic core.

Further, the housing includes a side wall extending from a periphery of the bottom plate, the side wall includes a bottom side wall, a middle side wall and a top side wall, the bottom side wall and the middle side wall form a first step, the top side wall and the middle side wall form a second step therebetween, the first step and the second step are opposite and spaced apart, and together with the middle side wall enclose a mounting cavity, the magnetic core is received in the mounting cavity.

In another aspect, the present invention further provides a lawn mower, including a lawn mower body and the aforementioned motor, the motor is installed in the lawn mower body.

The magnetic pole portion of the present invention is substantially triangular, therefore, the first and second receiving grooves together form a substantially V-shaped structure, so that after the magnets are placed in the first and second receiving grooves, pole faces of the corresponding magnetic pole portions can be magnetized as a magnetic pole. The magnetic poles arranged in this way have a significant magnetizing effect, which helps to increase the power density of the motor.

### DESCRIPTION OF THE DRAWINGS

Fig. 1 is a structural block diagram of a lawn mower according to an embodiment of the present invention.
Fig. 2 is a perspective view of a motor of the lawn mower of Fig. 1.
Fig. 3 is a cross-sectional view of the motor of Fig. 2.
Fig. 4 is an exploded view of the motor of Fig. 2.
Fig. 5 is an exploded view of a stator of the motor of Fig. 4.
Fig. 6 is an exploded view of a rotor of the motor of Fig. 4.
Fig. 7 is an exploded view of a rotor magnetic core and magnets of the rotor of Fig. 6.
Fig. 8 is a top view of the rotor magnetic core of Fig. 7.
Fig. 9A is a side view of the rotor of the motor of Fig. 4.
Fig. 9B is a cross-sectional view of the rotor of Fig. 9A along a line A-A.
Fig. 9C is a partial enlarged view at M of the cross-sectional view of the rotor of Fig. 9B.
Fig. 10A is a side view of a housing of the rotor of Fig. 9A.
Fig. 10B is a cross-sectional view of the housing of Fig. 10A along a line B-B.
Fig. 10C is a partial enlarged view at N of the cross-sectional view of the housing of Fig. 10B.

### DETAILED DESCRIPTION OF THE PREFERRED EMBODIMENTS

Hereinafter, the present invention will be described in detail with reference to the accompanying drawings and specific embodiments, so as to make the technical solutions and beneficial effects of the present invention clearer. It can be understood that the drawings are only provided for reference and explanation, and are not used to limit the present invention. The dimensions shown in the drawings are only for the convenience of clear description, and do not limit the proportional relationship.

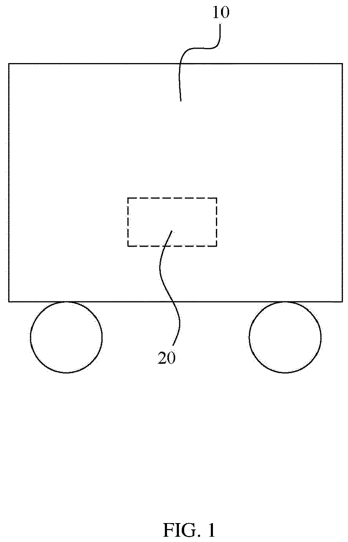

Referring to Fig. 1, a lawn mower according to an embodiment of the present invention includes a lawn mower body 10 and a motor 20 installed in the lawn mower body 10. Since a main improvement of the present invention lies in the motor 20, the lawn mower body 10 can adopt conventional structures and principles. Therefore, the specific structure of the lawn mower body 10 will not be described in detail in this embodiment.

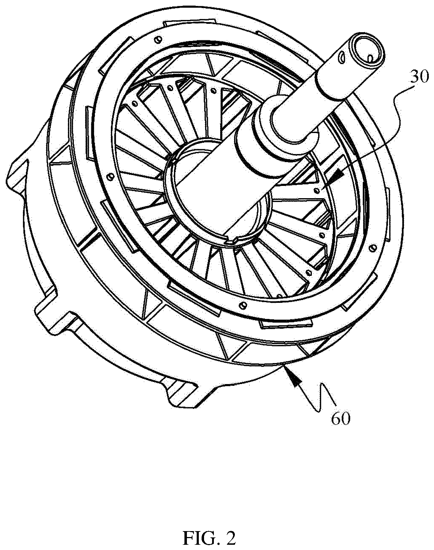

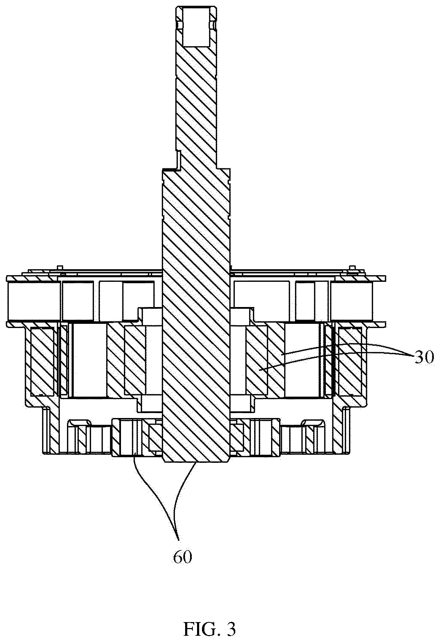

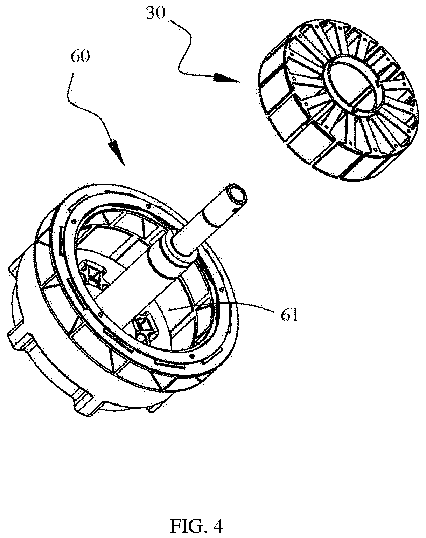

Referring to Figs. 2 to 4, the motor 20 includes a stator 30 and a rotor 60 substantially surrounding the stator 30. The rotor 60 is provided with a receiving space 61 for receiving the stator 30, and the rotor 60 can rotate relative to the stator 30.

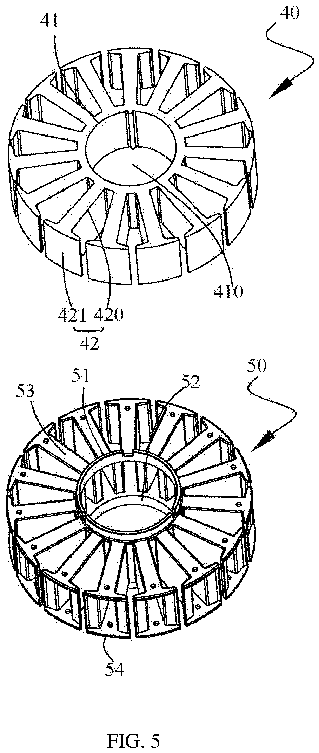

Referring also to Fig. 5, the stator 30 includes a stator core 40, an insulating frame 50 sleeved on the stator core 40, and windings (not shown) wound on the insulating frame 50. The stator core 40 includes an annular portion 41 at the center and a plurality of teeth 42 extending radially outward from an outer side of the annular portion 41. A through hole 410 is defined in a middle of the annular portion 41. A diameter of the through hole 410 is larger than a diameter of a rotating shaft 90 so that the rotating shaft 90 can pass through and rotate freely relative to the stator core 40. Each tooth 42 includes a tooth body 420 and a pole shoe 421 arranged at a distal end of the tooth body 420. In this embodiment, the tooth body 420 has a rectangular parallelepiped shape, and the pole shoe 421 extends in a circumferential direction and is substantially arc-shaped. Specifically, an outer surface of the pole shoe 421 is an arc-shaped pole surface, and an inner surface of the pole shoe 421 includes two planes distributed on both sides of the tooth body 420 and inclined at an obtuse angle with respect to the tooth body 420. Preferably, the plurality of pole shoes 421 are evenly distributed along the circumferential direction, and the outer surfaces of all the pole shoes 421 are located on a same cylindrical surface. The insulating frame 50 includes a ring-shaped upper flange 51, a ring-shaped lower flange 52, a plurality of frame-shaped brackets 53 connected between a bottom end of the upper flange 51 and a top end of the lower flange 52, and arc-shaped brackets 54 connected to distal ends of the frame-shaped brackets 53, wherein the frame-shaped brackets 53 are used for accommodating the tooth bodies 420 of the stator core 40, and the arc-shaped brackets 54 are used for accommodating the pole shoes 421 of the stator core 40. When the insulating frame 50 is assembled on the stator core 40, an outer surface and parts of upper and lower end surfaces of the annular portion 41 of the stator core 40, as well as surfaces of the teeth 42 are covered by the insulating frame 50, and the outer surfaces of the pole shoes 421 are exposed, therefore, after the windings are wound, the insulation between the windings and the stator core 40 is ensured. The material of the insulating frame 50 is preferably plastic.

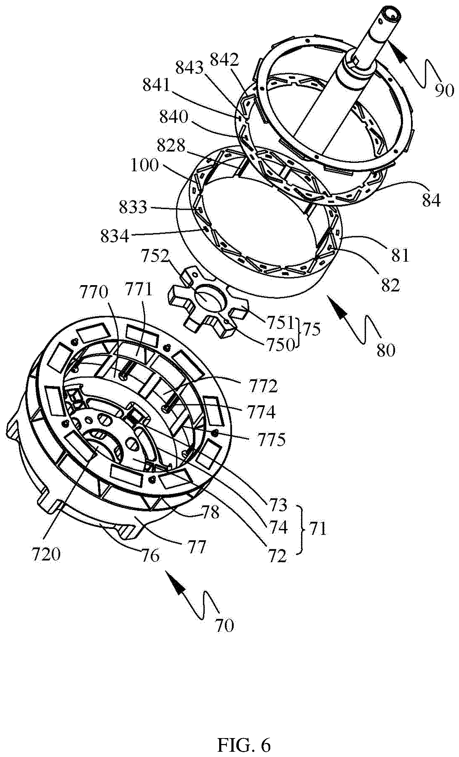

The structure of the rotor will be described in detail below with reference to FIG. 6. The rotor 60 includes a housing 70, a rotor magnetic core 80 and a rotating shaft 90 fixedly connected to the housing 70, and magnets 100 fixed in the rotor magnetic core 80. Wherein, the housing 70 is substantially in the shape of a hollow cylinder with an open end, and includes a circular bottom plate 71 and a side wall extending perpendicularly from a periphery of the bottom plate 71. The rotor magnetic core 80 has a substantially ring shape and is fixed to an inner side of the side wall of the housing 70, and the stator 30 is located in the rotor magnetic core 80. One end of the rotating shaft 90 is fixed at the center of the bottom plate 71 of the housing 70, and the other end penetrates the stator 30 and protrudes from the open end of the side wall of the housing 70 as an output end.

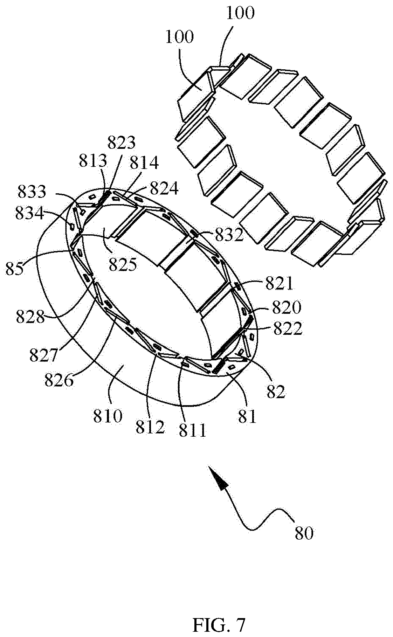

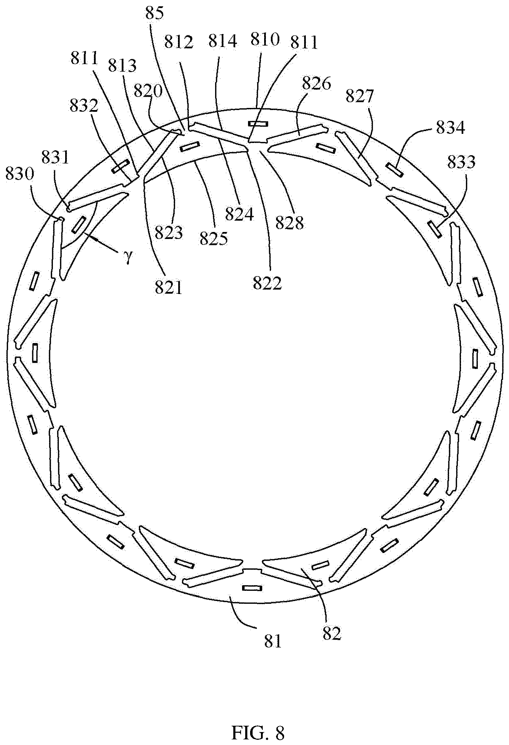

Refer to Figs. 7-8 at the same time, in this embodiment, the rotor magnetic core 80 includes a substantially annular body portion 81 and a plurality of magnetic pole portions 82 connected to the body portion 81. The plurality of magnetic pole portions 82 are circumferentially distributed inside the body portion 81 and connected to the body portion 81. Preferably, the rotor magnetic core 80 is formed by stacking a plurality of layers of laminations, and each lamination is integrally formed by stamping and includes a part corresponding to one layer body portion 81 and a part corresponding to one layer magnetic pole portions 82. Therefore, after stacking a plurality of layers of laminations, the body portion 81 and the magnetic pole portions 82 can be formed. In this embodiment, the number of magnetic pole portions 82 is ten. Both the body portion 81 and the magnetic pole portions 82 are made of ferromagnetic materials, and the ferromagnetic materials may be commonly used iron, cobalt, nickel or their alloys. Preferably, both the body portion 81 and the magnetic pole portions 82 are made of soft ferromagnetic materials to improve magnetic permeability.

An outer surface 810 of the body portion 81 is a cylindrical surface, and an inner surface of the body portion 81 includes a plurality of V-shaped grooves, so that the inner surface forms alternately arranged peaks 811 and valleys 812. Specifically, each valley 812 has first and second inner side surfaces 813 and 814. An angle between the first inner side surface 813 and the second inner side surface 814 is an obtuse angle. Preferably, the first and second inner side surfaces 813 and 814 of the body portion 81 are both flat.

Each magnetic pole portion 82 is connected to the body portion 81 at a corresponding valley 812. In this embodiment, each magnetic pole portion 82 is substantially triangular, and its vertex protrudes radially outward to form a connecting portion 85, and the vertex of the magnetic pole portion 82 is connected to the corresponding valley 812 of the body portion 81 by the connecting portion 85, two side surfaces on both sides of the vertex are spaced and opposed to the first inner side surface 813 and the second inner side surface 814 on both sides of the valley 812 of the body portion 81, thereby forming two gaps on both sides of the magnetic pole portion 82, wherein one end of each gap is opened. An radial inner side opposite to the vertex faces a center of the magnetic core and constitutes a pole face of the magnetic core. The pole faces of the plurality of magnetic pole portions 82 are located on a circumferential surface, and the circumferential surface is concentric with the body portion 81.

Specifically, the magnetic pole portion 82 includes a connecting end 820, a first free end 821 and a second free end 822. A first outer side surface 823 of the magnetic pole portion 82 is formed between the connecting end 820 and the first free end 821, and a second outer side surface 824 of the magnetic pole portion 82 is formed between the connecting end 820 and the second free end 822. A pole face 825 of the magnetic pole portion 82 is formed between the first and second free ends 821 and 822. The connecting end 820 is connected to a corresponding valley 812 of the body portion 81. The first outer side surface 823 of the magnetic pole portion 82 is opposite to spaced apart from the first inner side surface 813 on a side of the corresponding valley 812 to form a first receiving groove 826 for accommodating a magnet 100, wherein, the first free end 821 of the magnetic pole portion 82 and the peak 811 on a side of the valley 812 are adjacent to and spaced apart from each other. Therefore, the first receiving groove 826 starts at a joint of the valley 812 and the connecting end 820, ends at the first free end 821 and the corresponding peak 811, and defines an opening at the first free end 821 and the peak 811. The second outer side surface 824 of the magnetic pole portion 82 and the second inner side surface 814 on the other side of the corresponding valley 812 define a second receiving groove 827 for accommodating a magnet 100, wherein the second free end 822 of the magnetic pole portion 82 and the peak 811 on the other side of the valley 812 are adjacent to and spaced apart from each other. Therefore, the second receiving groove 827 starts at a joint of the valley 812 and the connecting end 820, and ends at the second free end 822 and the corresponding peak 811, and defines an opening at the second free end 822 and the peak 811.

The magnets 100 are accommodated in the receiving grooves 826, 827 defined between the magnetic pole portion 82 and the body portion 81, wherein the magnets 100 accommodated in the first and second receiving grooves 826, 827 corresponding to each magnetic pole portion 82 has the same polarity. Since the first and second outer side surfaces 823, 824 of the magnetic pole portion 82 forming the first and second receiving grooves 826, 827 are expanded from the connecting end 820 to both sides, the first and second receiving grooves 826, 827 are arranged substantially in a V shape. Preferably, the first and second outer side surfaces 823, 824 of the magnetic pole portion 82 are also planes, and are respectively parallel to the first and second inner side surfaces 813, 814 of the body portion 81, that is, both axial cross-sections of the first and second receiving grooves 826, 827 are substantially rectangular.

In this embodiment, the body portion 81 and each magnetic pole portion 82 form first and second receiving grooves 826, 827 for accommodating the magnets 100 of the same polarity, and the first and second receiving grooves 826, 827 together form a substantially V-shaped structure, so that after the magnets 100 are embedded in the first and second receiving grooves 826, 827, the pole face 825 of the corresponding magnetic pole portion 82 is magnetized into one magnetic pole. The magnetic poles arranged in this way can significantly increase the magnetization effect, thereby increasing the power density of the motor 20.

Preferably, the degree γ of a pole arc (that is, a arc spanned by the pole face in the circumferential direction) of the magnetic pole portion 82 is preferably 125°. This setting can further optimize the magnetization effect of the magnetic pole. It is understandable that in other embodiments, a degree of the polar arc may also be an other obtuse angle.

Preferably, an opening 828 with a width of 3 to 5 mm is defined between the first free end 821 of the magnetic pole portion 82 and the second free end 822 of an adjacent magnetic pole portion 82. As a result, a greater magnetic resistance can be generated, thereby reducing or avoiding the passage of magnetic flux through the opening 828, and promoting the magnetic flux generated by the magnets 100 in the first and second receiving grooves 826 and 827 to pass through the pole face 825 as much as possible. It is helpful to further improve the magnetization effect, thereby increasing the power density of the motor 20. Since the magnetic pole concentration effect in this embodiment is better than that of prior arts, in some applications, low-grade neodymium magnets (NdFeB) can be used, thereby reducing the manufacturing cost of the motor 20.

Preferably, the first and second accommodating grooves 826 and 827 are further respectively extended to form first and second recesses 830 and 831 adjacent to the connecting end 820 of the magnetic pole portion 82. The first and second recesses 830, 831 are approximately in the shape of a groove with one side open, so that the connecting portion 85 between the body portion 81 and the magnetic pole portion 82 is approximately in the shape of a strip, and the first and second recesses 830, 831 are respectively located on both sides of the connecting portion 85. Preferably, the peak 811 of the body portion 81 protrudes radially inward to form a limiting protrusion 832, and the limiting protrusion 832 is located at one end of the first and second receiving grooves 826 and 827 away from the outer surface 810 of the body portion 81. The limiting protrusion 832 can effectively prevent the magnets 100 received in the receiving grooves 826 and 827 from falling out. In this embodiment, the limiting protrusions 832 correspond to the openings 828 between the magnetic pole portions 82 in a one-to-one correspondence.

In this embodiment, the housing 70 of the rotor 60 is preferably integrally formed by injection molding. The bottom plate 71 includes a base 72 in the center, a plurality of radially extending ribs 73 connecting the base 72 and a bottom end of the side wall of the housing 70. Preferably, the bottom plate 71 further includes an annular rib 74 connected to a middle part of each rib 73, which helps to improve the overall strength of the bottom plate 71.

The rotating shaft 90 is fixedly connected to the bottom plate 71 of the housing 70 through a mounting bracket 75 arranged in the base 72. The mounting bracket 75 is embedded in the base 72, and the rotating shaft 90 is directly fixed on the mounting bracket 75. The material strength of the mounting bracket 75 is greater than the material strength of the base 72, so it can provide stronger support to the rotating shaft 90 and ensure the coaxiality of the rotating shaft 90 and the stator 30 when the rotor 60 rotates. Preferably, the mounting bracket 75 is made of metal material, and the base 72 is made of plastic. It is also preferable that the mounting bracket 75 is integrally embedded in the base 72 by insert molding. In order to clearly show the structure of the mounting bracket 75, the mounting bracket 75 and the base 72 are in a separated state in FIG. 6, but it is understandable that in a finished motor of the present invention, the mounting bracket 75 may be non-detachable connected to the base 72. In this embodiment, the mounting bracket 75 and the base 72 each have a through hole 752, 720. An inner diameter of the through hole 752 of the mounting bracket 75 is smaller than an inner diameter of the through hole 720 of the base 72. Preferably, one end of the rotating shaft 90 is in interference fit with the through hole 752 in the mounting bracket 75.

Specifically, in this embodiment, the mounting bracket 75 includes an annular mounting ring 750 and a plurality of protrusions 751 extending radially outward from an outer circumference of the mounting ring 750. The protrusions 751 of the mounting bracket 75 are evenly arranged in the circumferential direction. When the mounting bracket 75 is embedded in the base 72 by insert molding, the material of the base 72 fills the gaps between the protrusions 751 of the mounting bracket 75, which helps to improve the torsion resistance of the mounting bracket 75 and the base 72, preventing the mounting bracket 75 from rotating relative to the base 72, and thereby preventing the rotating shaft 90 from rotating relative to the housing 70.

The side wall of the housing 70 include a bottom side wall 76, a middle side wall 77, and a top side wall 78 that are sequentially connected and gradually increase in outer diameter. An inner diameter of the bottom side wall 76 is smaller than an inner diameter of the middle side wall 77, and an annular first step 770 extending in the radial direction is formed between the bottom side wall 76 and the middle side wall 77. In other words, the first step 770 is located between an outer side of the bottom side wall 76 and an inner side of the middle side wall 77. An annular second step 771 extending in the radial direction is formed between the top side wall 78 and the middle side wall 77. Preferably, an inner side of the second step 771 extends radially inward to be equal to the inner diameter of the first step 770. The first step 770 and the second step 771 are opposite to each other, and together with the middle side wall 77 enclose a mounting cavity 772 for accommodating the rotor magnetic core 80.

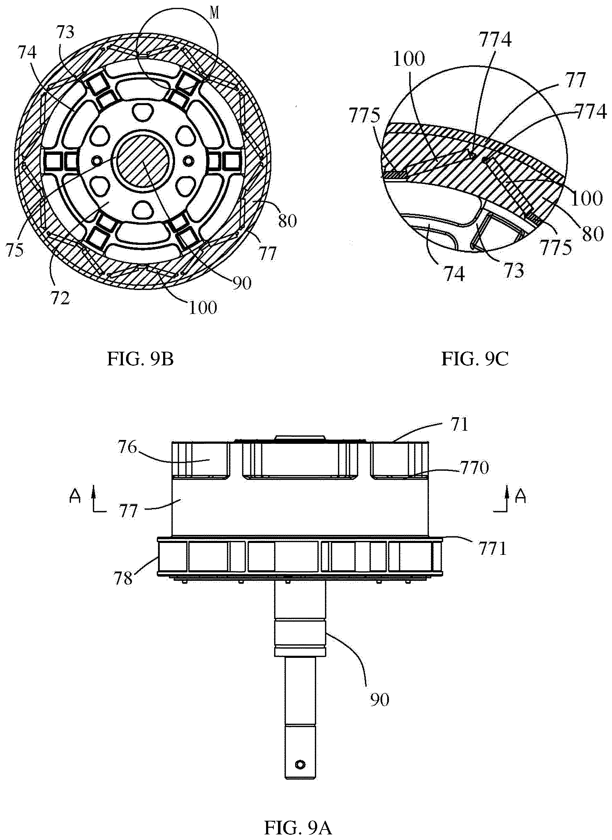

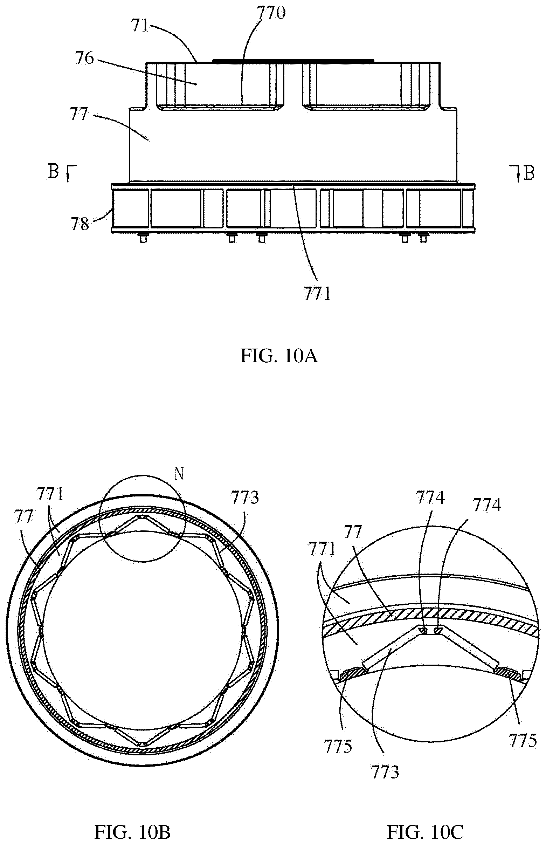

Preferably, a connecting ring 84 is connected between a top of the rotor magnetic core 80 and the housing 70. The connecting ring 84 may be fixedly connected to the rotor magnetic core 80 and the housing 70 in a snap-fit manner, and then the housing 70 and the rotor magnetic core 80 are fixedly connected. For example, an inner bump 833 may be provided at a top of each magnetic pole portion 82, and an outer bump 834 may be provided at a top of a part of the body portion 81 between adjacent magnetic pole portions 82. The connecting ring 84 is provided with inner and outer through holes 840, 841 for the inner and outer bumps 833, 834 to pass through. The engagement of the bumps 833, 834 and the through holes 840, 841 realizes the connection of the rotor magnetic core 80 and the connection ring 84. Referring to Figs. 9A to 10C at the same time, strip-shaped protrusions 773 are provided at a bottom end of the second step 771 of the housing 70, and through holes 842 for the protrusions 773 to pass through are provided in the connecting ring 84, through the snap fit of the protrusions 773 and the through holes 842, the connection between the housing 70 and the connecting ring 84 is realized, and the housing 70 and the rotor magnetic core 80 are fixedly connected. In this embodiment, the connecting ring 84 is also provided with notches 843 corresponding to the openings 828 between adjacent magnetic pole portions 82.

In this embodiment, the housing 70 forms a non-detachable whole with the rotor magnetic core 80 by overmolding. Specifically, when mounding the housing 70, the rotor magnetic core 80 (and/or the mounting bracket 75) is arranged in a mold, and plastic is injected into the mold to form the housing 70. In order to enhance the connection strength between the housing 70 and the rotor magnetic core 80, the housing 70 also includes a number of connecting bars 774 distributed in the mounting cavity 772 along the circumferential direction. The connecting bars 774 axially penetrates the rotor magnetic core 80 from the bottom end of the second step 771 (that is, one end facing the first step 770) and is inserted into the first step 770. Preferably, each magnetic pole portion 82 corresponds to two connecting bars 774, and the two connecting bars 774 are respectively inserted into the first recess 830 and the second recess 831. Preferably, the housing 70 further includes a plurality of fixing posts 775 distributed in the mounting cavity 772 along the circumferential direction. Each fixing post 775 extends in the axial direction, one end of which is fixedly connected to a top end of the first step 770 and the other end is fixedly connected to the bottom end of the second step 771. The fixing posts 775 are embedded in the notches 843 of the connecting ring 84 and the openings 828 of the rotor magnetic core 80.

The above are only preferred specific implementations of the present invention. The protection scope of the present invention is not limited to the above-listed examples. Any person skilled in the art can obviously obtain the technology within the technical scope disclosed in the present invention. Simple changes or equivalent replacements of the solutions fall within the protection scope of the present invention.

## Claims

1. A magnetic core, comprising an annular body portion and a plurality of magnetic pole portions connected to the body portion, the plurality of magnetic pole portions circumferentially distributed inside the body portion, **characterized in that** the body portion and the magnetic pole portions are connected to each other, each of the magnetic pole portions is triangular and comprises a top end and two free ends, the top end is connected to the body portion, two side surfaces on both sides of the top end of the magnetic pole portion are respectively opposed to and spaced apart from an inner surface of the body portion to form a first receiving groove and a second receiving groove, the first receiving groove and the second receiving groove are for receiving magnets, the first receiving groove and the second receiving groove have open ends in an inner surface of the magnetic core.

2. The magnetic core of claim 1, **characterized in that** the inner surface of the body portion comprising a plurality of mutually spaced V-shaped grooves, so that alternately arranged peaks and valleys are formed on the inner surface, and the top end of each magnetic pole portion is connected to two adjacent valleys of the body portion through a connecting portion.

3. The magnetic core of claim 2, **characterized in that** each valley comprises a first inner side surface and a second inner side surface, the two side surfaces of each magnetic pole portion are respectively opposed to and spaced apart from the first inner side surface and the second inner side surface to form the first receiving groove and the second receiving groove, wherein, an angle between the first inner side surface and the second inner side surface is an obtuse angle.

4. The magnetic core of claim 3, **characterized in that** the first receiving groove and/or the second receiving groove are further extended to form recesses adjacent to the top end of the magnetic pole portion.

5. The magnetic core of claim 2, **characterized in that** the body portion protrudes radially inward at the peaks to form limiting protrusions, and the limiting protrusions are located at ends of the first receiving groove and the second receiving groove away from an outer side of the body portion.

6. The magnetic core of claim 1, **characterized in that** an opening is defined between adjacent free ends of two adjacent magnetic pole portions, and a width of the opening is 3 to 5 mm.

7. The magnetic core of claim 1, **characterized in that** the magnetic pole portion forms a pole face between the two free ends, and a degree of a pole arc of the pole face is 125°.

8. A motor, comprising a stator and a rotor rotatable relative to the stator, **characterized in that** the rotor comprises the magnetic core of any one of claims 1-7 and magnets accommodated in the first receiving grooves and the second receiving grooves of the magnetic core.

9. The motor of claim 8, **characterized in that** the rotor further comprises a housing, the magnetic core is received in the housing, the housing comprises a bottom plate and a side wall extending from a periphery of the bottom plate, the side wall comprises a bottom side wall, a middle side wall and a top side wall, the bottom side wall and the middle side wall form a first step, the top side wall and the middle side wall form a second step therebetween, the first step and the second step are opposite and spaced apart, and together with the middle side wall enclose a mounting cavity, the magnetic core is received in the mounting cavity.

10. A lawn mower, **characterized in that**, comprises a lawn mower body and the motor of claim 8, the motor is installed in the lawn mower body.
